(19) Europäisches Patentamt
European Patent Office
Office européen des brevets

(11) Publication number: 0 290 937 A2

# (12) EUROPEAN PATENT APPLICATION

(21) Application number: 88107131.0

(51) Int. Cl.4: C08L 71/04 , C08L 25/04

(22) Date of filing: 04.05.88

(30) Priority: 14.05.87 US 50241

(43) Date of publication of application: 17.11.88 Bulletin 88/46

(84) Designated Contracting States: DE FR GB IT NL

(71) Applicant: GENERAL ELECTRIC COMPANY
1 River Road
Schenectady New York 12305(US)

(72) Inventor: Axelrod, Robert Jay
13 Sussex Place
Glenmont New York 12077(US)

(74) Representative: Catherine, Alain
General Electric France Service de Propriété Industrielle 18 Rue Horace Vernet B.P. 76
F-92134 Issy-les-Moulineaux Cédex(FR)

## (54) Improvements of the processability of an antistatic blend of PPE and polystyrene through the addition of a styrene acrylic acid copolymer.

(57) Antistatic thermoplastic molding compositions comprising (1) polyphenylene ether resin with or without a styrene resin, preferably with a high impact polystyrene resin, (2) an alkenyl aromatic resin copolymerized with an olefin acid and (3) one or more antistatic additives are described. The compositions are more stable against losses of the antistatic additive due to migration, volatilization, washing out and the like, due to the attraction of the antistatic agent to the olefin acid portion of component (2).

EP 0 290 937 A2

Xerox Copy Centre

## STATEMENT OF THE INVENTION

This invention relates to antistatic thermoplastic molding compositions comprising a (1) polyphenylene ether resin with or without a styrene resin, preferably with a rubber modified high impact polystyrene resin, (2) an alkenyl aromatic resin copolymerized with an olefin acid and (3) one or more antistatic additives.

## BACKGROUND OF THE INVENTION

Many synthetic thermoplastic polymers are poor conductors, or nonconductors, of electricity. A consequence of this characteristic is that after the polymer or a blend of the polymer and other ingredients has been fashioned into a molded article, coating, film or fiber, electrostatic charges tend to accummulate on the surface and are not freely dissipated. This is especially characteristic of polymers having surface resistivities greater than $10^{12}$ (ohms/square), many of which are commercially important. Electrostatic charges can accumulate on the surface of these polymeric materials to levels equivalent to 20,000 to 30,000 volts. Even with lower levels of static build-up, however, many undesirable effects can still occur. Contact with synthetic materials in automobile seat covers, floor rugs, clothing, and so forth may create a high static charge on a person which, when subsequently discharged by contact with a grounded object, causes an unpleasant sensation of shock. The accompanying spark, moreover, can create a serious hazard in flammable or explosive atmospheres, such as found in hospital operating rooms (anesthesia gases) and underground excavations for the mining of ore.

The problem is especially acute in the electronics industry, where relatively low static charges can result in a catastrophic failure of sensitive microelectronic devices, and in the business machine industry, where paper jam-ups in photocopiers are often directly attributable to the accumulation of electrostatic charges as the copy paper passes over plastic platens and guides.

Various ways have been proposed in the past for treating at least some of these polymers to make them more dissipative of surface charges. Some involve modification of the polymer itself. For instance, Ohya et al., in U.S. Patent No. 4,384,078, have proposed that a more static resistant polymer material can be obtained by graft polymerizing a vinyl or vinylidene monomer, such as sodium styrene sulfonate, onto a rubber copolymer of an alkylene oxide and a conjugated diene. The resulting product is said to be blendable with other thermoplastic resins and utilizable in conjunction with conventional antistatic agents. Borman, on the other hand, has disclosed in U.S. Patent No. 3,259,520 that polyphenylene oxide resins can be altered to be antistatic by forming certain ionic derivatives through nuclear substitution with groups such as sulfonate groups.

Still other methods involve the formation of blends of antistatic agents with the polymer. Castro et al., in U.S. Pat. No. 4,210,556, teach that a liquid ethoxylated amine such as N,N-bis(2-hydroxyethyl)alkenyl or a mixture of alkenyl and alkenyl amines can be admixed with a polymer, for example, a polyolefin or polyphenylene oxide, to form a homogeneous liquid which can then be cooled to a solid antistatic agent. The solid can be blended into a polymer to impart antistatic properties.

Baron et al., in U.S. Patent No. 3,933,779, disclose that certain bis-ethoxylated quaternary ammonium salts of paratoluene sulfonic acid are useful as antistatic agents for various synthetic polymers, including polystyrenes, polyesters, polyamides, polycarbonates, polyolefins, and ABS resins.

Abolins et al. have found that an antistatic agent based on a mixture of triethanolamine, toluene sulfonic acid and sodium lauryl sulfate is an effective additive for polyphenylene ether resins and blends. This discovery is described in U.S. Patent No. 4,123,475.

Japan Patent No. 47-22474 discloses that certain metal salts of sulphonated vinyl aromatic compounds, for example, sulphonated polystyrene, are useful as antistatic agents for polymeric materials.

U.S. Patent No. 4,341,882 describes blends of polyphenylene ether, polystyrene and an antistatic agent which can be a styrene-allyl alcohol copolymer, an anionically polymerized poly(ethylene oxide) and a combination of both.

More recently, Luxon has shown in U.S. Patent No. 4,384,063 that the antistatic behavior of N,N-bis(2-hydroxyethyl)-N-octyl-N-methyl ammonium para toluene sulfonate (also identified in the above mentioned Baron et al. patent as methyl-octyl-bis(2-hydroxyethyl-) ammonium para-toluene sulfonate), is enhanced in a polyphenylene ether resin blend when used in conjunction with a small amount of a polyethylene glycol ester.

Polymer blends modified by the addition of antistatic compounds based on amines often suffer from

certain deleterious effects, however. The additive can often be removed from the surface of a molded part by simply rinsing with water or a non-aqueous solvent, and this detracts from the surface antistatic behavior. In the case of some polymers where migration of the additive to the surface occurs, the antistatic effect may return after only several hours or days. For other polymers, however, examples of which are polyphenylene ether resins and polystyrenes, the antistatic behavior recovers much more slowly, and may not fully return for several months. Moreover, many antistatic amines have poor compatibility with the polymer, a result of which is that only small amounts of the additive will be tolerated. The later phenomenon can present the following dilemma. On the one hand, the use of concentrations of additive above the threshold of compatibility may lead to processing difficulties during injection molding. Typically, this is manifested by extruder screw slippage as a result of lubrication from excess (incompatible) amounts of the additive, and by erratic molding cycle times. On the other hand, the relatively small amounts of additive dictated by these processsing requirements necessarily limits the antistatic performance of the molded article.

There have been attempts to overcome the above-mentioned shortcomings of antistatically modified compounds.

In Luxon, U.S. Patent No. 4,537,925 there is disclosed polyphenylene ether blends containing electrostatically bound additive. The blends described therein are comprised of (a) a polyphenylene ether resin, (b) an alkenyl aromatic resin having highly polar ionic substituents or groups appended to the polymer chain, and (c) one or more property modifying additives which are electrostatic bound to (b) through the charged substituents. The highly polar ionomeric substituents are described as being strongly acidic or strongly basic groups, for example, sulfonic acid, phosphorous acid and quaternary ammonium or the salts thereof. The blends are said to avoid the aforementioned problems due to the electrostatic attraction between the additive and charged pendant groups. Specifically, the additive (c) is said to be more resistant to being washed out, and processing difficulties such as screw slippage and erratic molding cycle times are said to be sharply reduced or entirely eliminated.

It has now been discovered that the composition blends of the present invention exhibit processing parameters and physical properties including antistatice be havior comparable to those compositions of Luxon, while in some instances exhibiting improved physical characteristics. Especially notable in the latter-mentioned instance is the resistance to blistering of the present compositions upon exposure to high humidity or water.

Also, any deleterious effects which the prior art highly polar pendant ionic groups may exhibit, e.g., corrosion of processing equipment, molding equipment and the like are avoided by the present compositions.

## SUMMARY OF THE INVENTION

This invention provides, in one aspect, compositions of (a) a polyphenylene ether resin, (b) an alkenyl aromatic resin copolymerized with an olefin acid and (c) one or more property modifying additives.

The compositions of this invention are capable of tolerating larger amounts of the additives than previously possible while avoiding problems associated with them. And beneficially, the additive is resistant to being washed out, and processing difficulties such as screw slippage and erratic molding cycle times are sharply reduced or entirely eliminated.

Another aspect of the invention comprises articles molded from the described blend compositions of (a), (b) and (c).

Good melt flow is an important property in the case of polyphenylene ether resin molding compositions. The property is often measured as channel flow length, with longer lengths representing better melt flow. Flow improvements are conventionally obtained by the addition of plasticizers which are typically dispersed throughout the resin matrix. Unfortunately, such improvements are all too often accompanied by decreases in the heat distortion temperature of the molded composition, making the moldings more susceptible to effects such as warpage and the like when exposed to above normal temperatures. Thus, many commercial molding compositions represent a compromise, falling somewhere between as high a heat distortion temperature as possible, on the one hand, and as long as a channel flow as possible, on the other hand. Heretofore, one could rarely optimize both properties.

Increased melt flow is a highly sought-after property. Longer melt flow easily translates into reduced cycle times, lower pressures, lower temperatures, and reduced equipment costs, and concomitantly, increased productivity, lower energy costs and reduced capitalization.

With the compositions of the present invention, there is manifested, as compared to similar compositions containing the antistatic agent alone, an improved combination of high melt flow and high heat distortion temperature, as well as improved antistatic behavior apparently again due to the presence of component (b).

DESCRIPTION OF THE INVENTION

Preferred polyphenylene ether resins for use as component (a) are homopolymers or copolymers having units of the formula

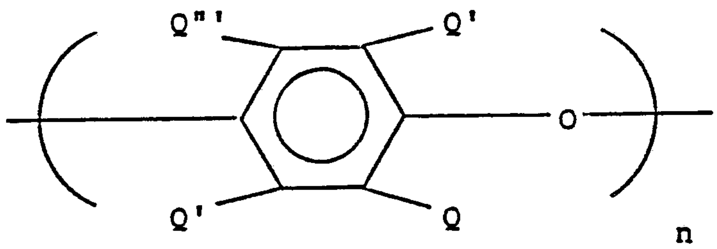

in which Q, Q′, Q″ and Q′__ are independently selected from the group consisting of hydrogen, halogen, hydrocarbon radicals, halohydrocarbon radicals, hydrocarbonoxy radicals and halohydrocarbonoxy radicals; and n represents the total number of monomer units and is preferably an integer of at least about 20, and more preferably at least 50.

These resins are, in general, self-condensation products of monohydric, monocyclic phenols produced by reacting the phenols with oxygen in the presence of complex metal catalysts, with the molecular weight being controlled by the reaction time, longer times providing a higher average number of repeating units. Particular procedures are known to those skilled in the art and are described in the patent literature.

Suitable phenolic monomers include but are not limited to: 2,6-dimethylphenol; 2,6-diethylphenol; 2,6-dibutylphenol; 2,6-dilaurylphenol; 2,6-dipropylphenol; 2,6-diphenylphenol; 2-methyl-6-ethylphenol; 2-methyl-6-cyclohexylphenol; 2-methyl-6-tolylphenol; 2-methyl-6-methoxyphenol; 2-methyl-6-butylphenol; 2,6-dimethoxyphenol; 2,3,6-trimethylphenol; 2,3,5,6-tetramethylphenol; and 2,6-diethoxyphenol.

Some of the polymers which can be produced and which are within the above formula are: poly(2,6-dilauryl-1,4-phenylene)ether; poly(2,6-diphenyl-1,4-phenylene) ether; poly(2,6-dimethoxy-1,4-phenylene)-ether; poly(2,6-diethoxy-1,4-phenylene)ether; poly(2-methoxy-6-ethoxy-1, 4-phenylene)ether; poly(2-ethyl-6-stearyloxy-1,4-phenylene) ether; poly(2,6-dichloro-1,4-phenylene)ether; poly(2-methyl6-phenyl-1,4-phenylene)ether; poly(2,6-dibenzyl-1,4-phenylene)ether; poly(2-ethoxy-1,4-phenylene)ether; poly(2-chloro-1,4-phenylene)ether; poly(2,6-dibromo-1,4-phenylene)ether; and the like.

Also included within the formula are copolymers prepared from mixtures of phenolic monomers. Special mention is made of those based on the reaction of 2,6-dimethylphenol with other phenols, for example, with 2,3,6-trimethylphenol or 2-methyl-6-butylphenol to produce the corresponding copolymer, for example, poly-(2,6-dimethyl-co-2,3,6-trimethylphenol), poly(2,6-dimethyl-co 2-methyl-6-butylphenol), and so forth.

Especially preferred for use in this invention are homopolymers having alkyl substituents in the two positions ortho to the oxygen ether atom, that is, those of the above formula in which Q and Q′ are alkyl, and particularly alkyl having from 1 to 4 carbon atoms. Most preferred is poly(2,6-dimethyl-1,4-phenylene ether).

Included within the definition of the polyphenylene ether resin which may be used in the present invention as (a) are polyphenylene ethers together with other polymers in the present kinds of blends, for example, with aromatic polycarbonates, polyesters, polyamides, poly(vinyl chlorides) and so forth. Particularly preferred are poly(alkenyl aromatics), for example, polystyrene, which are essentially non-copolymerized, that is, devoid of the aforementioned olefin acid mentioned above with respect to component (b). Examples of such suitable poly(alkenyl aromatics) are disclosed in Cizek, U.S. Patent No. 3,383,435. Amounts ranging from 99:1 to 1:99, states as a weight ratio of these two polymers, are permissable for use in this invention.

Component (b) can be any homopolymer or co-and terpolymer or rubber-modified homopolymer based alkenyl aromatic compounds of the formula

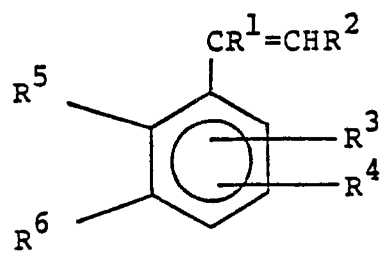

wherein R' and $R^2$ are selected from the group consisting of lower alkyl or alkenyl groups of from 1 to 6 carbon atoms, and hydrogen; $R^3$ and $R^4$ are selected from the group consisting of chloro, bromo, hydrogen and lower alkyl of from 1 to 6 carbon atoms, or $R^5$ or $R^6$ may be concatenated together with hydrocarbyl groups to form a naphthtyl group.

Examples include rubber-modified high impact polystyrene (HIPS), styrene-acrylonitrile (SAN) rubber, styrene-butadiene (SBR) rubber, linear, graft and radial teleblock copolymers of styrene and butadiene (or of styrene and isoprene), styrene-acrylonitrile-butadiene (ABS) terpolymers, and so forth.

Especially preferred is homopolymer styrene.

Copolymerization of component (b) to add the olefin acid may be carried out using methods known in the art.

The olefin acid suitable for use in the present invention is any olefin acid copolymerizable with the alkenyl aromatic resin portion of (b) which is the main component thereof.

In general, the olefin acid is an unsaturated aliphatic acid of the general formula $C_nH_{2n-2}O_2$. Without limitation, such acids include: acrylic acid; ($C_2H_3COOH$); the butenic acids (crotonic, isocrotonic, vinylacetic acids; (all within the general formula $C_3H_5COOH$)); the pentenic acids (alpha (1,2); beta (2,3); or gamma (3,4) all within the general formula $C_5H_7COOH$).

Especially preferred is acrylic acid.

In general, the degree of copolymerization is dependent on the amount of additive (c) to be added to the composition. It is necessary only to incorporate enough olefin acid to satisfactorily compatibilize the additive. Typically, the degree of copolymerization of the major portion of component (b) with the olefin acid is about 0.1 to about 10 mole percent of the olefin acid.

For component (c), any conventional additive or combination of two or more additives may be selected which are attracted to the olefin acid groups of component (b) dispersed throughout the blend. The same or similar effects of attraction should be exhibited whether the additive functions as a conductive antistatic agent, a color stabilizer, an ultraviolet light stabilizer, plasticizer, and so forth. Special mention is made, however, of additive compounds having an amine functionality, and especially quaternary or tertiary amine antistatic agents.

Especially preferred are antistatic compounds for component (c) such as described in the above-cited Baron et al. patent, having the formula:

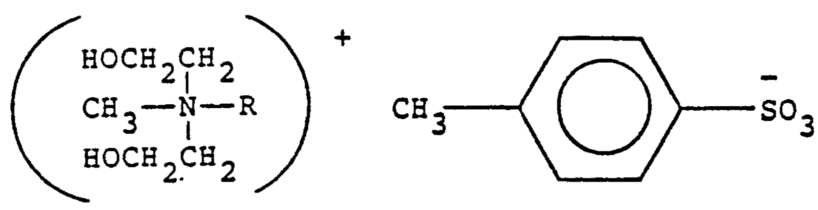

in which R is alkyl of from 4 to 18 carbon atoms, unsubstituted or substituted with halo or aryl.

Most preferred for use in this invention is methyloctyl-bis(2-hydroxyethyl)ammonium para-toluene sulfonate (the compound of the above formula where R is octyl), which is also termed N,N-bis(2-hydroxyethyl)-N-octyl-N-methyl ammonium paratoluene sulfonate.

Relative amounts of (a), (b) and (c) can vary widely in accordance with this invention. For instance, the blends can comprise from about 5 to about 95 parts by weight of component (b), with component (c) being present in concentrations of from about 1 to about 15 parts by weight for each 100 parts of (a) and (b) combined.

The preferred embodiments of this invention will be formulated in accordance with the following:

| Ingredients | Amount, Parts by Weight |
|---|---|
| Polyphenylene oxide | about 20.0 to about 80.0 |
| High Impact Polystyrene | about 80.0 to about 20.0 |
| Polystyrene/Acrylic Acid Copolymer, (b) | about 1.0 to about 15.0 |
| Antistatic agent, (c) | about 3.0 to about 11.0 |

The compositions may be prepared for molding by forming a dry admixture of the ingredients, which is then extruded and injection molded into a shaped article.

Various types of articles may be produced and, in general, the same kinds known to be prepared from engineering resins and plastics in general. By way of illustration, the blends of this invention may be fabricated into personal care products, such as hair dryers and hair curling irons; household articles, such as clothes irons, coffee makers and food processors; interior panels and exterior grilles and decorative trim for automobiles; housings and internal component parts, e.g., guides in computers or business machines; TV or radio cabinets; and so forth.

## DESCRIPTION OF THE SPECIFIC EMBODIMENTS

The invention is illustrated in the examples below, which are intended for instructive purposes and are not meant to be limiting. Amounts are stated in parts by weight. Static decay was measured using an ETS Model 406A Static Decay Meter, in accordance with Federal Test Method 101B, without conditioning.

The antistat enhancer compositions which were utilized in the Examples which follow are set forth in Table 1 below. The s-PS is similar to that of Luxon, U.S. Patent No. 4,537,925. The Surlyns are acrylic acid-containing ethylene copolymers, evaluated in the Examples as further comparisons.

TABLE 1

Summary of Antistat Enhancer

| Designation | Type | Wgt % styrene | Wgt % ammonium styrene sulfonate | Wgt % acrylic acid | Wgt % ethylene |
|---|---|---|---|---|---|
| s-PS | 1 | 95.0 | 5.0 | 0 | 0 |
| M-104 | 2 | 93.3 | 0 | 6.7 | 0 |
| M-105 | 2 | 90.4 | 0 | 9.6 | 0 |
| M-106 | 2 | 88.5 | 0 | 11.5 | 0 |
| M-467 | 2 | 84.6 | 0 | 15.4 | 0 |
| Surlyn 8660 | 3 | 0 | 0 | 11 | 89 |
| Surlyn 9450 | 3 | 0 | 0 | 9 | 91 |

1 = copoly(styrene/styrene sulfonic acid) completely neutralized as ammonium salt

2 = copoly(styrene/acrylic acid)

3 = copoly(ethylene/acrylic acid) partially neutralized as sodium salt (8660) or zinc salt (9450)

EXAMPLES 1-14 AND COMPARISON EXAMPLES A-E

The compositions shown below were prepared by mixing the ingredients, passing the mixture through a twinscrew extruder at 540°F, oooling the extrudate and chopping it into pellets and injection molding the pellets into test pieces using an injection temperature of 515°F and a mold temperature of 150°F.

The test results for physical properties and antistatic behavior are reported in TABLES 2 and 3, respectively.

As can be seen from the Tables, the compositions of the present application exhibit a beneficial aggregate of properties, including good heat distortion temperatures, flow channel lengths, impact strengths and flexural characteristics. At the same time, the compositions show good processing and antistatic characteristics without the need for the highly polar acid or basic groups of the prior art compositions, thus avoiding the deleterious effects associated therewith.

TABLE 2

| Example* | Antistat Enhancer | phr | ASTM HDT (f) | Flow Channel (in) | Izod Impact (ft-lbs/in) | Dynatup (in-lbs) E frac | Flex Modulus (kpsi) | Flex Yield (kpsi) |
|---|---|---|---|---|---|---|---|---|
| A | s-PS | 10 | 195 | 22.0 | 4.5 | 29 | 235 | 6.7 |
| 1 | M-104 | 5 | 195 | 20.0 | 6.9 | 64 | 252 | 6.9 |
| 2 | M-104 | 10 | 194 | 20.5 | 4.0 | 43 | 252 | 6.8 |
| 3 | M-105 | 5 | 190 | 20.0 | 2.4 | 257 | 247 | 6.6 |
| 4 | M-105 | 10 | 195 | 18.0 | 4.0 | 30 | 253 | 7.0 |
| 5 | M-106 | 5 | 197 | 17.5 | 5.2 | 37 | 241 | 6.8 |
| 6 | M-106 | 10 | 193 | 17.0 | 5.5 | 20 | 233 | 6.5 |
| B | Surlyn 8660 | 5 | 194 | N.A. | 1.8 | 17 | 226 | 5.6 |
| C | Surlyn 8660 | 10 | N.A. | N.A. | N.A. | N.A. | N.A. | N.A. |
| D | Surlyn 9450 | 5 | 197 | 20.5 | 2.2 | 20 | 223 | 5.5 |
| E | Surlyn 9450 | 10 | 188 | 21.5 | 1.5 | 30 | 201 | 5.1 |
| 7 | M-106 | 8 | 199 | 16.5 | 4.3 | 19 | 236 | 6.9 |
| 8 | M-106 | 6 | 193 | 17.5 | 2.0 | 49 | 236 | 6.6 |
| 9 | M-106 | 4 | 195 | 20.0 | 5.1 | 113 | 243 | 6.6 |
| 10 | M-106 | 3 | 194 | 20.0 | 2.8 | 185 | 236 | 6.5 |
| 11 | M-106 | 2 | 190 | 21.5 | 3.3 | 286 | 245 | 6.4 |
| 12 | M-106 | 1 | 184 | 24.0 | 3.7 | 203 | 245 | 6.4 |
| 13 | M-467 | 5 | 192 | 27.0 | 3.4 | 204 | 275 | 7.1 |
| 14 | M-467 | 10 | 193 | 26.0 | 3.1 | 166 | 270 | 7.2 |

TABLE 3

| Example* | Processability | Surface Resistivity (ohm/sq at 50% RH) | Static Decay To 10% Charge (sec.) | Static Decay To 0% Charge (sec.) | Residual Charge |
|---|---|---|---|---|---|
| A | No Screw Slip | 1.0E+10 | 0.03 | 0.06 | None |
| 1 | Minor Screw Slip | 2.9E+11 | 30 | 30 | High |
| 2 | Screw Slip | 1.6E+11 | 30 | 30 | High |
| 3 | No Screw Slip | 2.9E+11 | .62 | 30 | Slight |
| 4 | No Screw Slip | 1.8E+11 | 0.03 | 0.13 | None |
| 5 | No Screw Slip | 1.4E+11 | 0.03 | 0.14 | None |
| 6 | No Screw Slip | 4.4E+11 | 0.03 | 0.06 | None |
| B | Severe Screw Slip | 1.3E+11 | 0.03 | 0.11 | None |
| C | Matl. Came Up Vent | N/A | N/A | N/A | None |
| D | Severe Screw Slip | 1.5E+11 | 0.03 | 0.09 | None |
| E | Severe Screw Slip | 1.5E+11 | 0.04 | 0.10 | None |
| 7 | No Screw Slip | 9.1E+10 | 0.05 | 0.40 | High |
| 8 | Moderate Screw Slip | 1.5E+11 | 1.10 | 8.00 | None |
| 9 | Screw Slip | 1.2E+12 | 0.40 | 30 | Slight |
| 10 | Screw Slip | 7.3E+11 | 0.80 | 25 | None |
| 11 | Severe Screw Slip | 4.4E+11 | 0.80 | 30 | Slight |
| 12 | Severe Screw Slip | 5.1E+11 | 0.80 | 8.0 | None |
| 13 | Severe Screw Slip | 5.1E+11 | 1.10 | 16.0 | None |
| 14 | Severe Screw Slip | 5.1E+11 | 1.20 | 8.0 | None |

*All blends also contain: PPO/HIPS/Hexcel 106G 90%/Kraton 1651 20/80/6/10

Hexcel 106G 90%: methyl octyl bis(2-hyroxyethyl) ammonium p-toluenesulfonate 90%/water 10%

HIPS: Huntsman 1897

Kraton 1651: Shell saturated styrene butadiene block copolymer

EXAMPLE 15 AND COMPARATIVE EXAMPLE F

The composition of the prior art, Example A (Comparative Example F), and a composition according to the present invention, Example 7 (Example 15), were both washed in a dishwasher and again subjected to the Static Decay test as set forth above.

Both compositions exhibited no residual charge after static decay. Thus, the compositions of the present application, utilizing the styrene/acrylic acid copolymer, exhibit permanent antistatic effect. This is

surprising in that it was heretofore believed that permanent antistatic effect was achieveable only when a highly polar ionic substituent was employed in the compositions, as taught, for example, by Luxon.

In addition to the excellent physical and processing parameters exhibited by the compositions of the present invention, the present compositions also exhibit superior humidity and/or moisture resistance properties.

In this regard, the following experiment was performed.

Example 16 and Comparative Example G

Similar compositions of PPE/HIPS/Antistatic Agent/SBS were prepared and molded. One composition (Comparative Example G) contained, as an antistatic enhancer, the sulfonated polystyrene of Luxon, while the second composition (Example 16) contained the styrene/acrylic acid antistatic enhancer of the present invention.

Both compositions were exposed to water at 40°C for 10 days. The prior art composition exhibited severe blistering on the surface of the molded part, whereas the composition of the present invention was left unaffected.

This is an unexpected and surprising property directly attributed to the antistatic enhancer of the present invention.

All of the above mentioned patents are incorporated herein by reference.

Other modifications and variations of the invention are possible. It should be understood, therefore, that changes may be made in the particular embodiments shown which are within the scope of the invention as defined in the appended claims.

## Claims

1. A thermoplastic composition comprising:

(a) a polyphenylene ether resin, alone or together with another thermoplastic polymer devoid of any olefin acid;

(b) an alkenyl aromatic resin copolymerized with an olefin acid; and

(c) one or more property modifying additives attracted to the olefin acid of component (b).

2. A composition according to Claim 1, in which component (a) comprises a polyphenylene ether resin and a poly(alkenyl aromatic) resin devoid of any olefin acid.

3. A composition according to Claim 1, in which the polyphenylene ether resin in poly(2,6-dimethyl-1,4phenylene)ether.

4. A composition according to Claim 1, in which the olefin acid is selected from the group consisting of acrylic acid, butenic acids or pentenic acids or mixtures thereof.

5. A composition according to Claim 1, in which the olefin acid is acrylic acid.

6. A composition according to Claim 1, in which component (b) comprises units of the formula

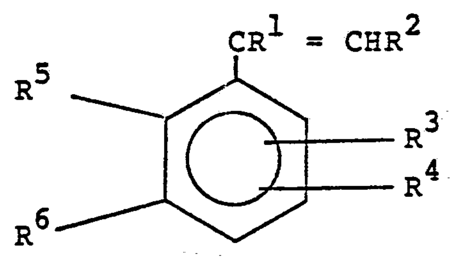

wherein $R^1$ and $R^2$ are selected from the group consisting of lower alkyl or alkenyl groups having from 1 to 6 carbon atoms, and hydroge; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl or alkenyl groups of from 1 to 6 carbon atoms, or $R^5$ and $R^6$ may be concatenated together with hydrocarbyl groups to form a naphthyl group.

7. A composition according to Claim 1, in which component (b) is rubber modified.

8. A composition according to Claim 1, in which component (b) is a copolymer of a polystyrene resin or a rubber modified polystyrene resin and acrylic acid.

9. A composition according to Claim 1, in which component (c) is an antistatic agent.

10. A composition according to Claim 9, in which component (c) has an amine functionality.

11. A composition according to Claim 9, in which component (c) is of the formula

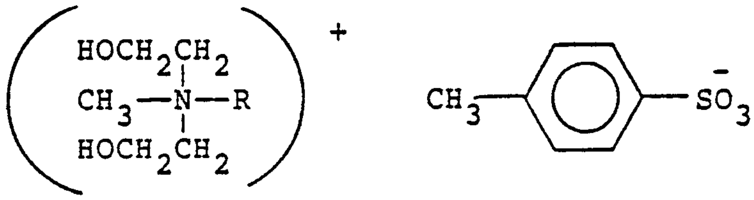

in which R is alkyl having from 4 to 18 carbon atoms, unsubstituted or substituted with halo or aryl.

12. A composition according to Claim 11, in which component (c) comprises methyl-octyl-bis(2-hydroxyethyl) ammonium para toluene sulfonate.

13. A composition according to Claim 1, wherein (a) is comprised of from about 1 to about 99 parts by weight of polyphenylene ether, and from about 99 to about 1 parts by weight rubber-modified high impact polystyrene based on 100 parts of (a), and (b) is present in the amount of from about 1.0 to about 15.0 parts by weight.

14. A composition according to Claim 13, comprising from about 1 to about 15 parts by weight of component (c).

15. A thermoplastic composition, comprising:

(a) from about 20.0 to about 80.0 parts by weight of a polyphenylene ether resin and from about 80.0 to about 20.0 parts by weight of a polystyrene resin devoid of any olefin acid;

(b) from about 1.0 to about 15.0 parts by weight of a copolymer of a polystyrene resin and acrylic acid; and

(c) from about 3.0 to about 11.0 parts by weight of an antistatic agent.

16. An article molded from the composition of Claim 1.

17. An article molded from the composition of Claim 3.

18. An article molded from the composition of Claim 8.

19. An article molded from the composition of Claim 12.

20. An article molded from the composition of Claim 15.